# EUROPEAN PATENT SPECIFICATION

(11) **EP 1 736 190 B1**
(45) Date of publication and mention of the grant of the patent: **05.03.2008**
(21) Application number: 05735909.3
(22) Date of filing: 15.04.2005
(51) Int. Cl.: A61M 5/172

(54) **PHARMACEUTICAL DISPENSER**
PHARMAZEUTISCHER SPENDER
MACHINE DE DISTRIBUTION DE PRODUITS PHARMACEUTIQUES

(30) Priority: 16.04.2004 ES 200400913 U
(43) Date of publication of application: 27.12.2006
(73) Proprietor: Pérez González, Miguel Angel, 28001 Madrid (ES)
(72) Inventor: Pérez González, Miguel Angel, 28001 Madrid (ES)
(86) International application number: PCT/ES2005/000197
(87) International publication number: WO 2005/099336

(56) References cited:
- EP-A1- 0 499 903
- WO-A2-00/54724
- FR-A1- 2 794 238
- US-A- 5 827 219
- US-A1- 2003 233 069

## Description

### Object of the invention:

This invention proposes a dispenser for medical or pharmaceutical products requiring exact or individualised doses offering the advantage against the actually known and used means, of a great dosage accuracy and the incorporation of a software system providing an easy, comfortable and efficient adaptation to the needs of each user, controlled from an external computer and using precise codes for access to different levels of security, making the machine specially safe for everyday use.

More concretely, this invention refers to a methadone dispenser, offering essential novelties and considerable advantages as regards the actually used means with the same purpose.

The application field of the invention is included within the industrial sector dedicated to the manufacturing and/or installation of machines or dispenser devices for liquid and viscous products.

### Invention antecedents and summary:

It is widely known the existance of certain programmes to help persons with a drug addiction problem who want to become desintoxicated until their total recovery. These programmes include the treatment of the patients with substitute substances to enable them to overcome their systematic anxiety crisis, and methadone is one the most commonly used substances.

The actual mechanical means offer the possibility of dispensing the product in accordance with the different doses required for each patient and even if they have been successfully used for their pretended utilisation, the everyday use has evidenced certain inconvenients to be corrected. The actual means have not a really accurate dosage of the product and, even if the devices are usually governed by a specific application software, this software is closed and therefore programmed in accordance with previously established characteristics.

US-A-2003-233069 discloses an infusion-pump especially for morphine where all components of the pump are in a housing with a locked door. As pump is used a computer-controlled syringe with a position-controlled plunger whereby a flow-meter is not necessary. The computer is controlled by input-data from a user-display.

This invention intends, as its main object, to offer a dispenser able to eliminate the above mentioned inconvenients and is consequently much more versatile to face the different real situations presented in everyday practice. This aim has been totally fulfilled with the hereinafter detailed dispenser and whose main characteristics are contained in Claim I.

Basically, the invention dispenser includes several operative components duly contained in a frame accessible through a door to be opened with its relative key, and the external part only has a dispensing orifice and the wires connecting the mains and the data processing connection, thus making the internal elements totally safe and unreachable from the outside. As a basic element for the accurate dosage of the product to be delivered, the dispenser incorporates a control plate with the necessary electronics to offer an effective control over the product dispensing pump in a container, in accordance with the pulses received from the flowmeter through which the dispensed dose passes. Additionally, a filter is incorporated at the outlet of the product, placed before the flowmeter, to eliminate all impurities carried by the product to be dispensed.

### Short description of the drawings:

The above and other characteristics and advantages of the invention are more clearly shown by the detailed description of the preferred execution system, given only as an illustrative and not limitative example, and regarding the enclosed drawings where:

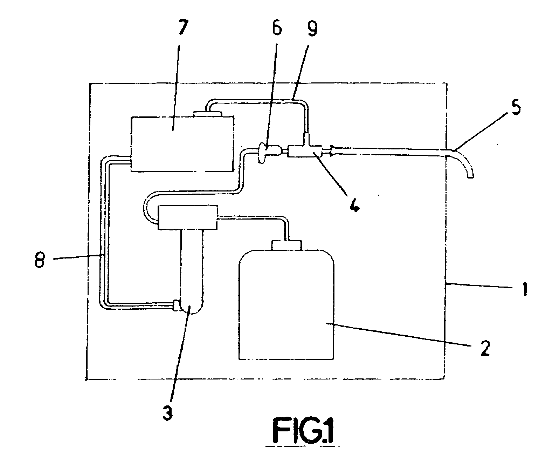

Figure 1) shows an schematic view of the machine proposed by the invention.

### Description of the Preferred Execution System:

As expresed above, the detailed description of the Preferred Execution System, is made with the help of the annexed drawing where its only Figure shows an schematic view of the machine with its different elements.

It is clearly seen that such elements are contained within a metallic frame 1) with access through a closed door to be opened with a key (nor shown in order to make drawing more clear), which guarantees that it cannot be manipulated by any person other than the authorised ones. The component elements are basically the following: A container 2), made of the predetermined material and capacity, where the product to be dispensed is stored, in particular a solution obtained by the active principle, for example methadone dust or chlorhydrate of methadone diluted in water or any other adequate liquid and the container including a sensor or any other level control device, which can be anyone of the actually known and usually used for similar purposes, not shown in the drawing for simplification purposes; Such device communicates with the liquid through a pump 3), preferably a peristaltic type, but any other type suitable for the requested application will be valid, which makes the product flow from container 2) towards a flowmeter 4) and from there is it forwarded to the outside by means of a silicone tube, with a filter 6) provided between the peristaltic pump 3) and flowmeter 4), to eliminate all impurities of the products to be delivered; a controller plate 7) is electrically connected to pump 3) in order to control its performance/stop, and also to flowmeter 4) by means of the respective connections 8) & 9), thus making an effective control of pump 3), depending on the pulses received from flowmeter 4), with the accurate amount of the required product.

It is hereby evidenced that the machine proposed by the invention makes it possible to measure the amount of dispensed product with a precision much higher than the required by the application it is going to be used, the frequency of the doses, etc. as the working orders are received in controller plate 7) from a database where all the details of the different patients are stored, which it is enough to find in each case the data of a certain patient and the machine receives the relative instructions about the amount of product to be delivered to each particular patient.

Besides, and in order to ensure a correct handling and to avoid unwanted manipulations, the invention has foreseen that the management software will include three security access levels, limiting or permitting handling by the user in accordance with the established access level, each one with a code and password for the system functions, and after the programme has been opened, all the relative actions are registered with the relative data, hour, code and password.

Additionally and as a complementary advantage, the machine proposed by the invention has a self-regulating capacity, as explained in the above detailed performance mode, and its control software, being an open system, permits the incorporation of the fields and functions required by the patients such as increases or decreases of the required amount, as well as the incorporation of a software programme permitting bidirectional data communication through Internet, and even the possibility of using bar codes. These advantages are not present in nowadays existing machines.

We consider this description must not be extended because any expert in this matter will easily be able to understand the scope and advantages derived from the same and to develop and put into practise the object of the invention.

However, it is to be understood that the invention has been described in its Preferred Execution System, and that it can be modified without any sustantial alteration of the fundaments of the invention and such modifications might affect, the shape, size and/or manufacturing materials of the elements forming the proposed machine itself.

## Claims

1. A machine, dispenser of pharmaceutical products, dedicated to the delivery of given dosages of a solution diluted in water or any other similar liquid, formed by an external metallic frame (1), accessible through a door opened and closed with a key, with several funtional operation and storage elements including a container (2) for the product to be dispensed, provided with an internal sensor; a product delivery pump (3), preferably of the peristaltic type, with an entrance connected with a fluid source in the container (2), with an outlet connected to a flowmeter (4); a filter (6) placed between the pump (3) and the flowmeter (4); a pipe or tube (5) from the flowmeter (4) to the outside which delivers the required product to the patient; and a controller plate (7), electrically connected to the pump (3) and the flowmeter (4), providing the start/stop functions in accordance with the pulses received from the flowmeter (4); the controller plate (7) is also connected bidirectionally with a database giving instructions for the execution of the different functions and which confirms the executed operations.

## Patentansprüche

1. Maschine, Arzneimittelspender, zur Lieferung von mit Wasser oder jeglicher anderer ähnlichen Flüssigkeit verdünnten Dosierungen, durch ein äußeres Metallgehäuse (1) aufgebaut, durch eine Tür zugänglich, welche sich mit einem Schlüssel öffnet und schließt, mit mehreren Elementen funktionaler Betätigung und Speicherelementen die einen Behälter (2) für das zu spendende Produkt einschließen, mit einem inneren Sensor ausgestattet; eine Produktlieferungspumpe (3), vorzugsweise von peristaltischer Art, mit einem im Behälter (2) an eine Fluidquelle angeschlossenen Eingang, mit einem an ein Flussmessgerät (4) angeschlossenen Ausgang; einem zwischen der Pumpe (3) und dem Flussmessgerät (4) gelegenen Filter (6); einer oder einem von dem Flussmessgerät (4) bis nach Außen reichenden Leitung oder Rohr (5), welche(s) das benötigte Produkt dem Patienten liefert; und einer elektrisch an die Pumpe (3) und an das Flussmessgerät (4) angeschlossenen Kontrollplatte (7), die die Einschalt- und Stillstandsfunktionen entsprechend den vom Flussmessgerät (4) empfangenen Impulsen zur Verfügung stellt; wobei die Kontrollplatte (7) auch bidirektional mit einer Datenbank verbunden ist, die Anweisungen zur Ausführung der verschiedenen Funktionen zur Verfügung stellt, und die die ausgeführten Vorgänge bestätigt.

## Revendications

1. Une machine, distributrice de produits pharmaceutiques, destinée à fournir des dosages donnés d'une solution diluée dans l'eau ou dans un tout autre liquide similaire, formée d'une carcasse (1) métallique externe, accessible à travers une porte qui s'ouvre et qui se ferme avec une clé, de divers éléments d'action fonctionnelle et de stockage qui incluent un conteneur (2) pour le produit à distribuer, équipé d'un capteur interne; une pompe (3) d'approvisionnement en produits, de préférence de type péristaltique, avec une entrée connectée à une source de fluide dans le conteneur (2), avec une sortie connectée à un débitmètre (4); un filtre (6) situé entre la pompe (3) et le débitmètre (4); un conduit ou tube (5) allant du débitmètre(4) à l'extérieur, qui fournit le produit demandé au patient; et une plaque (7) de commande, connectée électriquement à la pompe (3) et au débitmètre (4), qui fournit les fonctions de mise en marche/arrêt selon les pulsions reçues à partir du débitmètre (4); la plaque (7) de commande étant connectée également de manière bidirectionnelle à une base de données qui fournit des instructions pour l'exécution des différentes fonctions et qui confirme les opérations exécutées.
